# FASCICULE DE BREVET EUROPEEN

(11) **EP 2 930 842 B1**
(45) Date de publication et mention de la délivrance du brevet: **16.12.2020**
(21) Numéro de dépôt: 15162699.1
(22) Date de dépôt: 08.04.2015
(51) Int. Cl.: H02P 3/16, B25J 19/00, B25J 9/16

(54) **PROCÉDÉ DE COMMANDE D'UN ROBOT MULTI-AXES ET ROBOT POUR LA MISE EN OEUVRE D'UN TEL PROCÉDÉ**
STEUERVERFAHREN EINES MULTIACHSEN-ROBOTERS, UND ROBOTER FÜR DIE UMSETZUNG EINES SOLCHEN VERFAHRENS
METHOD FOR CONTROLLING A MULTI-AXIS ROBOT AND A ROBOT FOR CARRYING OUT SUCH A METHOD

(30) Priorité: 09.04.2014 FR 1453159
(43) Date de publication de la demande: 14.10.2015
(73) Titulaire: STAUBLI FAVERGES, 74210 Faverges (FR)
(72) Inventeur: Garde, Louis, 74000 Annecy (FR)
(74) Mandataire: Lavoix

(56) Documents cités:
- EP-A1- 1 857 229
- EP-A2- 2 631 043
- GB-A- 2 387 672
- US-A1- 2002 084 766

## Description

La présente invention concerne un procédé de commande d'un robot multi-axes, ainsi qu'un robot pour la mise en œuvre d'un tel procédé de commande.

Il est connu de commander un robot multi-axes en fournissant aux variateurs de pilotage de ses moteurs électriques des signaux de commande générés à partir d'une unité de calcul qui détermine la trajectoire du robot. Le moteur de chaque axe du robot est équipé d'un frein électromagnétique actionné par l'unité de calcul après l'arrêt contrôlé du mouvement sur sa trajectoire programmée, afin de bloquer les mouvements du robot, de manière à garantir la sécurité des utilisateurs et du matériel. Une fois le robot à l'arrêt, l'unité de calcul coupe le couple moteur.

Il est connu de US-A-2002/0084766 d'équiper le robot de variateurs qui contrôlent l'alimentation en énergie électrique des phases de chaque moteur. Chaque variateur inclut un circuit en pont, qui comporte une branche haute équipée de trois interrupteurs commutables, reliés chacun à un bus positif et à l'une des phases du moteur, ainsi qu'une branche basse équipée de trois interrupteurs commutables supplémentaires reliés chacun à un bus négatif et à l'une des phases du moteur.

Pour permettre l'arrêt d'urgence, les variateurs de US-A-2002/0084766 intègrent une fonction de coupure de couple sécurisée, également appelée « *safe torque off* », empêchant les interrupteurs de commuter lorsqu'elle est activée. Cette fonction est active dès lors que la commande de tous les interrupteurs des deux branches du circuit en pont d'un variateur est neutralisée. Lorsqu'un variateur coupe l'alimentation des interrupteurs des deux branches du pont à la fois, ceci crée une redondance qui permet d'améliorer la sécurité car le couple sera coupé même s'il survient une défaillance ayant pour conséquence d'alimenter par erreur l'une des branches du pont.

En outre, les variateurs permettent de mettre en œuvre une fonction de freinage électrique, réalisée en mettant en court-circuit les phases du moteur que l'on souhaite freiner, c'est-à-dire en fermant tous les interrupteurs de l'une des branches du pont. La fonction de freinage électrique est utile pour déplacer manuellement en toute sécurité une partie mobile du robot soumise à la pesanteur, car le freinage limite la prise de vitesse de la partie mobile lorsqu'elle est entrainée vers le bas par son propre poids.

Lorsque l'arrêt d'urgence a été activé et que l'utilisateur a besoin de libérer un frein pour déplacer une partie mobile du robot, il existe alors un risque de déplacement rapide et incontrôlé de cette partie sous l'effet de la pesanteur, ce qui est dangereux.

Il est nécessaire de désactiver la fonction de coupure du couple sur l'une des branches du pont pour permettre l'activation du freinage électrique, afin de réactiver la commande des interrupteurs pour les fermer. Ceci dégrade la sécurité car la redondance introduite par la fonction de coupure de couple sécurisée est alors supprimée, puisque les interrupteurs de l'une des branches ne sont plus neutralisés. La norme ISO 10218-1 concernant les robots industriels exige un niveau de sécurité SIL 2 et une redondance sur la fonction d'arrêt d'urgence. Ces exigences de sécurité ne sont dès lors plus respectées.

C'est à ces inconvénients qu'entend plus particulièrement remédier l'invention en proposant un procédé de commande d'un robot multi-axes, ainsi qu'un robot pour la mise en œuvre de ce procédé, ayant une architecture simple permettant un pilotage efficace, et garantissant un niveau de sécurité élevé tel que défini dans les normes en vigueur, notamment la norme IEC61508.

EP-A-1 857 229 divulgue un procédé selon le préambule de la revendication 1.

A cet effet, l'invention a pour objet un procédé de commande des freins des moteurs d'un robot multi-axes, le robot comprenant :
- un bras de robot comportant au moins deux degrés de liberté associés chacun à :
   - un moteur électrique,
   - un capteur de mesure d'informations de mouvement du degré de liberté,
   - un frein apte à bloquer le degré de liberté,
- une unité d'interfaçage des freins apte à piloter l'alimentation des freins en énergie électrique,
- une unité centrale apte à :
   - exécuter un programme de commande du bras de robot,
   - déterminer et envoyer des consignes de position,
- des variateurs aptes à générer, en fonction des consignes de position et des informations de mouvement, des courants d'alimentation de phases des moteurs, et disposant d'une fonction de coupure du couple des moteurs,
- un système de sécurité apte à analyser les informations de mouvement, à commander les freins et à commander la fonction de coupure du couple des moteurs,
le procédé comportant des étapes successives consistant à :
- 6a) sélectionner un moteur,
- 6b) activer une fonction de freinage électrique au moyen du moteur sélectionné, la fonction de freinage électrique étant assurée grâce à la force contre-électromotrice que le mouvement du bras de robot génère dans les bobinages des phases du moteur mises en court-circuit,
- 6c) ouvrir le frein associé au moteur sélectionné.
- 6d) comparer à un seuil prédéterminé les informations de mouvement délivrées par le capteur associé au moteur sélectionné lorsque celui-ci assure la fonction de freinage électrique,
- 6e) fermer le frein associé au moteur sélectionné lorsque les informations de mouvement dépassent le seuil.

Le procédé comporte, en outre, une étape en outre une étape se déroulant avant l'étape 6a) et consistant à activer la fonction de coupure sécurisée du couple des moteurs.

Grâce à l'invention, lorsque l'opérateur souhaite déplacer manuellement une partie mobile du bras de robot, il peut procéder à l'ouverture d'un frein de manière sécurisée puisque les conditions sont réunies pour que le moteur puisse freiner électriquement la partie mobile grâce à la force contre-électromotrice que le déplacement manuel de la partie mobile génère dans les bobinages des phases du moteur mises en court-circuit. L'opérateur peut également procéder à l'ouverture sécurisée du frein alors que le robot vient de subir un arrêt d'urgence.

Le système de sécurité est connecté aux variateurs, de manière à assurer la fonction de coupure de couple, ainsi qu'au système qui libère les freins des moteurs, de manière à garantir un freinage sécurisé commandé de manière sûre. Le système de sécurité est également connecté à des capteurs donnant la position, la vitesse et/ou l'accélération du moteur de manière sûre, c'est-à-dire en respectant les normes de sécurité. Ainsi, pour assurer les fonctions d'arrêt d'urgence et de freinage, il n'est pas nécessaire d'intégrer des éléments d'électronique spécifiques dans les variateurs.

L'opérateur bénéficie alors d'une double sécurité lorsque le robot est confronté à une défaillance ayant pour conséquence d'alimenter par erreur une phase du moteur sélectionné en courant. De plus, le niveau de sécurité est équivalent à celui d'une double coupure de couple puisque la surveillance des informations de mouvement, dans les étapes 6d) et 6e), détecte un rétablissement intempestif du couple suite à une défaillance d'une branche du circuit en pont.

Selon des aspects avantageux mais non obligatoires de l'invention, un tel procédé peut incorporer une ou plusieurs des caractéristiques suivantes, prises isolément ou dans toute combinaison techniquement admissible :
- Les informations de mouvement sont des positions, des vitesses et/ou des accélérations, et, lors de l'étape 6d), les informations de mouvement sont comparées à des seuils de même nature.
- Le procédé comporte une étape supplémentaire 5) consistant à activer un organe de validation, la désactivation de l'organe de validation entraînant la fermeture du frein associé au moteur sélectionné, et la coupure du couple du moteur sélectionné.

L'organe de validation permet une intervention sécurisée de l'opérateur car il doit être maintenu activé pendant toute la phase d'ouverture du frein et sa désactivation replace l'opérateur en conditions de sécurité puisqu'elle est suivie de la fermeture du frein et de la coupure sécurisée du couple moteur
- L'étape 6a) est effectuée sur un boitier de commande manuelle relié à l'unité centrale.
- L'étape 6a) est effectuée sur un boitier de commande des freins relié au système de sécurité.
- Les étapes 6b), 6c), 6d) et 6e) sont mises en œuvre par le système de sécurité.

L'invention a trait également à un robot pour la mise en œuvre d'un procédé de commande des freins des moteurs d'un robot multi-axes, le robot comportant :
- un bras de robot comportant au moins deux degrés de liberté associés chacun à :
   - un moteur électrique,
   - un capteur de mesure d'informations de mouvement du degré de liberté et
   - un frein apte à bloquer le degré de liberté,
- une unité d'interfaçage des freins, apte à piloter l'alimentation des freins en énergie électrique,
- une unité centrale apte à
   - exécuter des programmes de commande du bras de robot,
   - déterminer et envoyer des consignes de position des degrés de liberté,
- des variateurs aptes à générer, en fonction des consignes de position et des informations de mouvement, des courants d'alimentation des phases des moteurs, chaque variateur intégrant une fonction de coupure du couple,
   - un système de sécurité apte à analyser les informations de mouvement, à commander les freins et à commander la fonction de coupure sécurisée du couple des moteurs.

Le robot comporte un organe de libération des freins relié au système de sécurité et permettant la sélection du moteur associé au frein à ouvrir. Le système de sécurité est apte à activer une fonction de freinage électrique au moyen du moteur sélectionné, la fonction de freinage électrique étant assurée grâce à la force contre-électromotrice que le mouvement du bras de robot génère dans les bobinages des phases du moteur mises en court-circuit, après activation de la fonction de coupure sécurisée du couple des moteurs. Le système de sécurité est apte à comparer à un seuil prédéterminé les informations de mouvement délivrées par le capteur associé au moteur sélectionné lorsque celui-ci assure la fonction de freinage électrique, et à déclencher la fermeture du frein associé au moteur sélectionné lorsque les informations de mouvement dépassent le seuil.

Selon des aspects avantageux mais non obligatoires de l'invention, un tel robot multi-axes peut incorporer une ou plusieurs des caractéristiques suivantes, prises isolément ou dans toute combinaison techniquement admissible :
- L'organe de libération des freins comporte un organe de validation dont la désactivation entraîne la fermeture du frein associé au moteur sélectionné.

L'organe de validation permet une intervention sécurisée de l'opérateur car il doit être maintenu activé pendant toute la phase d'ouverture du frein.
- L'unité centrale, les variateurs et un contrôleur de sécurité faisant partie du système de sécurité sont regroupés dans une armoire distante du bras de robot.
- Le système de sécurité comprend l'unité d'interfaçage des freins.
- L'unité d'interfaçage des freins est apte à comparer à un seuil prédéterminé les informations de mouvement délivrées par le capteur associé au moteur sélectionné lorsque celui-ci assure la fonction de freinage électrique, et à déclencher la fermeture du frein associé au moteur sélectionné lorsque les informations de mouvement dépassent le seuil.
- L'organe de libération des freins est un boitier de libération des freins relié à l'unité d'interfaçage des freins.
- L'organe de libération des freins est un boitier de commande manuelle relié à l'unité centrale.
- L'unité d'interfaçage des freins est située dans le bras de robot.

L'invention sera mieux comprise et d'autres avantages de celle-ci apparaitront plus clairement à la lumière de la description qui va suivre d'un procédé de commande d'un robot multi-axes, ainsi que d'un robot multi-axes pour la mise en œuvre d'un tel procédé, donnée uniquement à titre d'exemple et faite en référence aux dessins annexés dans lesquels :
- la figure 1 est une vue schématique d'un robot multi-axes conforme à un premier mode de réalisation de l'invention ;
- la figure 2 est un schéma d'un circuit électrique faisant partie du robot de la figure 1 ; et
- la figure 3 est une vue schématique d'un robot multi-axes conforme à un deuxième mode de réalisation de l'invention ;

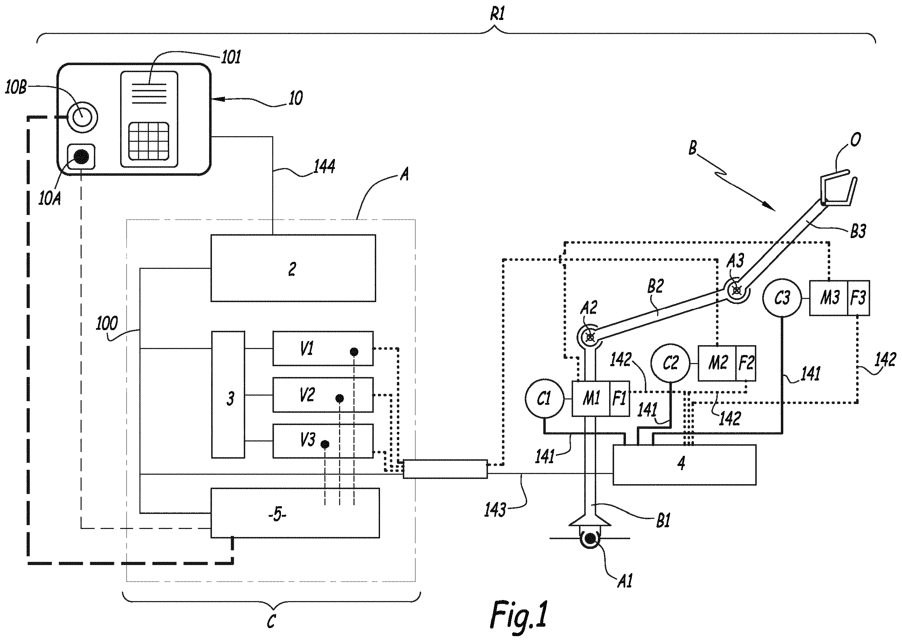

Le bras B du robot R1 représenté à la figure 1 est pourvu de trois degrés de liberté commandés chacun par un moteur M1, M2, ou M3 apte à déplacer une partie mobile B1, B2 ou B3 du bras de robot B autour d'un axe géométrique A1, A2 et A3, pour déplacer un outil O dans l'espace.

Les moteurs M1 à M3 sont représentés à l'extérieur du bras de robot B sur la figure 1 mais, en pratique, ils sont répartis à l'intérieur du bras de robot B, au voisinage des axes d'articulation A1, A2 et A3. Les moteurs M1, M2 et M3 sont, par exemple, des moteurs triphasés sans balais.

Trois capteurs de position ou codeurs C1, C2 et C3 sont répartis dans le bras de robot B et permettent de mesurer des informations de mouvement relatives aux degrés de liberté, par exemple la position angulaire des parties mobiles B1 à B3 autour de chacun des axes A1 à A3.

En variante, les capteurs C1 à C3 mesurent la vitesse ou l'accélération des parties mobiles, ou une combinaison d'informations de mouvement parmi la position, la vitesse et l'accélération.

Chaque moteur M1, M2 et M3 coopère avec un frein électromagnétique F1, F2 ou F3 qui, lorsqu'il est alimenté en courant électrique, autorise la rotation du rotor de chaque moteur M1, M2 et M3. Par défaut, en l'absence de courant électrique, les freins F1, F2 et F3 bloquent les rotors des moteurs M1 à M3, ce qui est favorable à la sécurité car, en cas de coupure de courant, les moteurs M1 à M3 sont freinés.

Une unité 4 d'interfaçage des capteurs C1, C2 et C3 et des freins F1, F2 et F3 est reliée à chaque capteur C1, C2 et C3 par une liaison 141 numérique dédiée sécurisée. Dans l'exemple représenté à la figure 1, l'unité d'interfaçage 4 est intégrée au bras de robot B et est disposée à l'extérieur d'une enveloppe ou armoire A qui renferme une unité de contrôle C séparée du bras de robot B.

L'unité d'interfaçage 4 est reliée à chaque frein F1, F2 et F3 par une liaison filaire 142 et comprend une unité de calcul qui pilote l'alimentation des freins F1, F2 et F3 en courant électrique, afin d'assurer leur ouverture et leur fermeture. L'unité de calcul de l'unité d'interfaçage 4 est apte à traiter les signaux délivrés par les capteurs C1, C2 et C3 en les reconditionnant selon le protocole EtherCAT pour les rendre accessibles à l'unité de contrôle C.

Une liaison 143 s'étendant du bras de robot B à l'unité de contrôle C relie l'unité d'interfaçage 4 à un bus commun 100. Le bus commun 100 permet de transférer les signaux électriques entre le bras de robot B et l'unité de contrôle C. L'unité d'interfaçage 4 permet de mettre en série ou « sérialiser » les informations provenant des capteurs C1 à C3 et des freins F1 à F3 puis de les faire transiter vers le bus commun 100.

Le bus commun 100 est un bus temps réel Ethernet qui fonctionne suivant le protocole EtherCAT et connecte entre eux une unité centrale 2, un contrôleur de sécurité 5, une carte de contrôle 3 des variateurs V1, V2 et V3 et l'unité d'interfaçage 4.

L'unité centrale 2 est disposée dans l'armoire A et comprend une unité de calcul apte à exécuter des programmes de commande du bras de robot B, et à calculer des consignes de position pour chaque partie mobile B1 à B3 du bras de robot B. Ces consignes de position sont envoyées sur le bus commun 100 et mises à disposition de la carte de contrôle 3.

Un organe de libération des freins F1, F2 et F3, à savoir un boîtier de commande manuelle 10, est disposé à l'extérieur de l'armoire A et est connecté à l'unité centrale 2 par une liaison EtherNET 144. Le boîtier de commande manuelle 10 et relié au contrôleur de sécurité 5 par l'intermédiaire de l'unité centrale 2. La liaison EtherNET 144 relie le boîtier de commande manuelle 10 à l'unité centrale 2, qui est reliée au contrôleur de sécurité 5 par le bus commun 100. Le boîtier de commande manuelle 10 comprend une interface de communication 101, par exemple un clavier et un écran d'affichage, qui permet à un opérateur de transmettre des ordres de commande au robot R1, et de recevoir des informations relatives au fonctionnement du robot R1, comme, par exemple les positions des parties mobiles B1, B2 ou B3. Le boitier de commande manuelle 10 permet de sélectionner un mode de fonctionnement manuel du robot R1, pour déplacer manuellement une partie mobile B1, B2 ou B3 du bras de robot B en cas de besoin, par exemple lors d'une phase d'apprentissage de trajectoire, pour une opération de maintenance ou, suite à un arrêt d'urgence, pour repositionner le bras de robot B dans une position adéquate.

Le boitier de commande manuelle 10 dispose d'un bouton d'arrêt d'urgence 10A et d'un contacteur homme-mort 10B, qui sont directement câblés au contrôleur de sécurité 5.

Le contacteur homme-mort 10B constitue un organe de validation désactivé par défaut, incluant un bouton de commande qu'il est nécessaire d'activer manuellement pour autoriser l'ouverture des freins F1 à F3. Lorsqu'il souhaite ouvrir un frein F1 à F3, l'opérateur doit activer manuellement le contacteur homme-mort 10B en maintenant enfoncé le bouton de commande pendant toute la durée de l'ouverture des freins F1 à F3, ce qui améliore le niveau de sécurité en évitant un déblocage accidentel des freins. La désactivation du contacteur homme-mort 10B entraîne la fermeture du frein F1, F2 ou F3 associé au moteur M1, M2 ou M3 sélectionné à l'aide de l'interface de communication 101.

Le contrôleur de sécurité 5 est destiné à assurer un fonctionnement sécurisé du robot R1. Il est connecté au bus commun 100 et reçoit les informations de mouvement relatives aux degrés de liberté. Il dispose d'une unité de calcul qui lui permet d'exécuter des programmes de surveillance du robot R1. Par exemple, il peut détecter la défaillance d'un capteur parmi les capteurs C1, C2 et C3 et commander l'arrêt du robot R1 suite à la détection de la défaillance.

Comme expliqué plus en détail dans la suite, le contrôleur de sécurité 5 est apte à analyser les informations de mouvement fournies par les capteurs C1, C2 et C3 et à piloter les freins F1, F2 et F3. Le contrôleur de sécurité 5 est relié aux variateurs V1, V2 et V3 pour pouvoir activer directement une fonction de coupure du couple des moteurs M1, M2 et M3.

Le contrôleur de sécurité 5 est apte à comparer à des seuils prédéterminés les informations de mouvement d'un degré de liberté sélectionné à l'aide du boîtier de commande manuelle 10, puis à déclencher la fermeture du frein F1, F2 ou F3 correspondant en fonction du résultat de cette comparaison. Le contrôleur de sécurité 5 assure ainsi une fonction de freinage sécurisé, à partir des informations de mouvement des degrés de liberté rendues accessibles par le bus commun 100.

La carte de contrôle 3 de l'unité de commande C est connectée directement au bus commun 100 et à chaque variateur V1, V2 et V3. La carte de contrôle 3 élabore les consignes de courant pour les variateurs V1, V2 et V3 en fonction des consignes fournies par l'unité centrale 2 et des informations de mouvement des degrés de liberté. La carte de contrôle 3 dispose des informations relatives à la position angulaire de chaque partie mobile B1, B2 et B3 au moyen de la connexion au bus commun 100. Elle est connectée aux variateurs V1, V2 et V3 dont elle reçoit des informations d'état telles que l'activation de la fonction de coupure du couple.

Les variateurs V1, V2 et V3 sont aptes à générer des courants d'alimentation dans les phases des moteurs M1, M2 et M3 en fonction des consignes de courant et des informations de mouvement des degrés de liberté. Ils intègrent chacun un circuit en pont assurant l'alimentation électrique des phases des moteurs M1, M2 et M3 et permettant à la fois de garantir une coupure de couple et d'assurer la fonction de freinage électrique au moyen des moteurs M1 à M3.

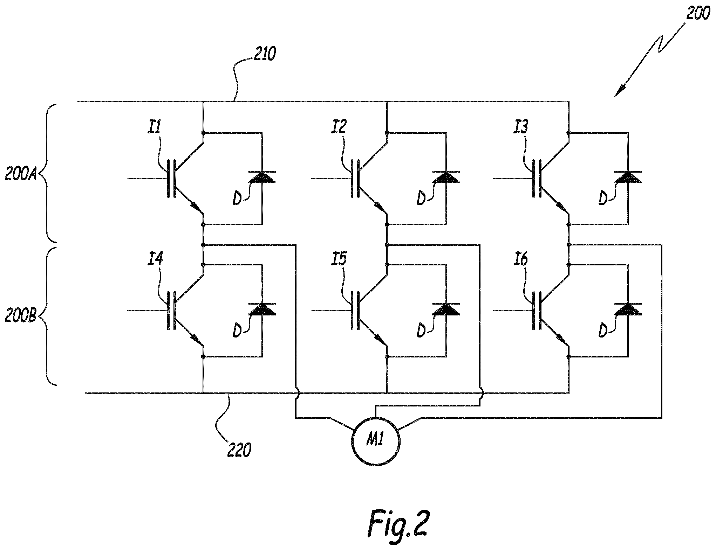

La suite concerne la description du circuit en pont 200 représenté à la figure 2 et qui appartient au variateur V1 associé au moteur M1, étant entendu que des circuits similaires sont intégrés aux variateurs V2 et V3 associés aux moteurs M2 et M3. Le circuit 200 comprend une première branche 200A regroupant trois interrupteurs I1, I2 et I3 formés chacun par un transistor IGBT dont la base est pilotée par le variateur V1. Le collecteur de chaque interrupteur I1, I2 et I3 est relié à un bus positif 210 et une diode de roue-libre D relie le collecteur à l'émetteur de chaque interrupteur. Une deuxième branche 200B du circuit 200 regroupe trois interrupteurs I4, I5 et I6 formés chacun par un transistor IGBT dont la base est pilotée par le variateur V1. L'émetteur de chaque interrupteur I4, I5 et I6 est relié à un bus négatif 220 et une diode de roue-libre D relie le collecteur à l'émetteur de chaque interrupteur. L'émetteur de chaque interrupteur I1, I2 et I3 est respectivement relié au collecteur de l'interrupteur I4, I5 ou I6 et à l'une des phases du moteur M1.

La carte de contrôle 3 est configurée pour commander automatiquement la fermeture des interrupteurs I1, I2 et I3 ou 14, I5 et 16 d'une branche 200A ou 200B du circuit en pont 200 d'un variateur V1, V2 ou V3 dont la fonction de coupure du couple a été désactivée alors qu'elle reste activée sur l'autre branche 200B ou 200A du circuit en pont 200. Le contrôleur de sécurité 5 est alors apte à piloter une fonction de freinage électrique au moyen des moteurs M1, M2 et M3.

La fonction de coupure du couple est effective dès lors que la commande de tous les interrupteurs d'au moins l'une des branches 200A et/ou 200B du pont 200 est neutralisée, de manière à les empêcher de commuter. Cette neutralisation est obtenue en coupant l'alimentation des interrupteurs I1, I2, I3 et/ou I4, I5, I6. Lorsque l'alimentation des interrupteurs I1 à 16 des deux branches 200A et 200B du pont 200 est coupée à la fois, une coupure dite « sécurisée » du couple est réalisée car ceci crée une redondance qui permet d'améliorer la sécurité car le couple demeure coupé même si la neutralisation de la commutation des interrupteurs de l'une des branches 200A ou 200B est défaillante. Les variateurs V1, V2 et V3 activent la fonction de freinage électrique en mettant les phases du moteur M1, M2 ou M3 en court-circuit, c'est-à-dire en fermant tous les interrupteurs de l'une des branches 200A ou 200B du pont. Lorsque la fonction de freinage électrique est activée, la force contre-électromotrice du moteur M1, M2 ou M3 sélectionné freine alors le mouvement de la partie mobile B1, B2 ou B3 correspondante, lorsque l'opérateur la déplace manuellement.

En fonctionnement, lorsque l'opérateur actionne l'arrêt d'urgence 10A dans une étape 1), l'unité de calcul 2 procède à l'arrêt du bras de robot B sur sa trajectoire en élaborant des consignes de positions correspondantes et en les envoyant à la carte de contrôle 3 dans une étape 2). Le contrôleur de sécurité 5 donne alors l'ordre de fermer les freins F1 à F3 dans une étape 3). Ensuite dans une étape 4), le contrôleur de sécurité 5 donne l'ordre aux variateurs V1 à V3 de neutraliser la commande de tous les interrupteurs I1 à I6 des deux branches 200A et 200B des trois circuits en pont 200. Dans la mesure où les deux branches 200A et 200B de chaque circuit en pont 200 sont neutralisées, une redondance est introduite, ce qui permet d'améliorer la sécurité car le couple sera coupé même s'il survient une défaillance ayant pour conséquence d'alimenter par erreur l'une des branches d'un circuit en pont 200.

Le bras de robot B est alors immobilisé de manière sûre.

Lorsque l'opérateur souhaite libérer un frein F1, F2 ou F3 pour déplacer manuellement une partie B1, B2 ou B3 du bras de robot B, il maintient appuyé, préalablement et durant toute la procédure, le contacteur homme-mort 10B du boîtier de commande manuelle 10 dans une étape 5).

Dans une étape 6a), l'opérateur sélectionne ensuite, à l'aide de l'interface de communication 101, le mode de fonctionnement manuel, ainsi que le moteur M1 à M3 associé au frein F1 à F3 qu'il souhaite libérer afin de déplacer manuellement la partie mobile B1, B2 ou B3. Cette consigne est transmise à l'unité centrale 2 qui informe le contrôleur de sécurité 5 que le frein F1, F2 ou F3 sélectionné va être ouvert. En retour, le contrôleur de sécurité 5 confirme à l'unité centrale 2 que le frein F1 à F3 à libérer est effectivement sélectionné.

Puis, dans une étape 6b), le contrôleur de sécurité 5 désactive la fonction de coupure du couple sur l'une des branches 200A ou 200B du circuit en pont 200 sélectionné. La carte de contrôle 3 détecte cette désactivation et ferme les interrupteurs I1, I2, I3 ou I4, I5, I6 de la branche 200A ou 200B pour permettre la mise en court-circuit des phases du moteur M1, M2 ou M3 sélectionné. De ce fait, le contrôleur de sécurité 5 active la fonction de freinage électrique remplie par le moteur M1, M2 ou M3.

Puis, dans une étape 6c), le contrôleur de sécurité 5 commande l'ouverture du frein F1, F2 ou F3 associé au moteur M1 à M3 sélectionné, par l'intermédiaire de l'unité d'interfaçage 4 qui alimente en courant électrique le frein F1, F2 ou F3 sélectionné. Dès lors, la partie mobile B1 à B3 associée au moteur M1 à M3 sélectionné est libre d'être déplacée manuellement, tout en étant freinée dans son mouvement par la force contre-électromotrice que le déplacement manuel de la partie mobile B1, B2 ou B3 génère dans les bobinages des phases du moteur M1, M2 ou M3 mises en court-circuit.

Le freinage électrique réalisé par la mise en court-circuit des phases du moteur M1, M2 ou M3 peut quelques fois être insuffisant pour contrer les effets de la pesanteur qui peuvent amener la partie mobile B1, B2 ou B3 à se déplacer rapidement, ce qui est dangereux.

Pour éviter le déplacement rapide de la partie mobile B1, B2 ou B3, le procédé comprend une étape 6d) successive à l'étape 6c), dans laquelle le contrôleur de sécurité 5 compare en permanence à un seuil prédéterminé l'information de mouvement fournie par le capteur C1 à C3 associé au moteur M1, M2 ou M3 sélectionné. Le seuil est de même nature que l'information de mouvement, c'est-à-dire que la grandeur mesurée par le capteur C1 à C3 est du même type que le seuil. Par exemple, si le seuil est une vitesse angulaire, alors l'unité de calcul du contrôleur de sécurité 5 effectue une dérivée mathématique de la position du rotor du moteur M1, M2 ou M3 sélectionné, fournie par le capteur C1 à C3, pour calculer une vitesse angulaire.

En variante, le seuil combine des informations de mouvement de nature différente, par exemple une position et une vitesse.

Dans une étape 6e), dès que l'information de mouvement dépasse le seuil, le contrôleur de sécurité 5 ferme le frein F1, F2 ou F3 en commandant la coupure de l'alimentation en énergie électrique du frein, par l'intermédiaire de l'unité d'interfaçage 4.

L'étape 6e) permet à l'opérateur de bénéficier d'un niveau de sécurité active puisque le robot R1 ferme de lui-même le frein F1 à F3 en cas de mouvement rapide indésirable.

Une fois le frein F1 à F3 fermé et dans une étape 6f), le contrôleur de sécurité 5 réactive la fonction de coupure sécurisée du couple sur les deux branches 200A et 200B du circuit en pont 200, afin d'assurer à nouveau un niveau de sécurité optimal.

En variante, les étapes 6e) et 6f) peuvent être effectuées simultanément.

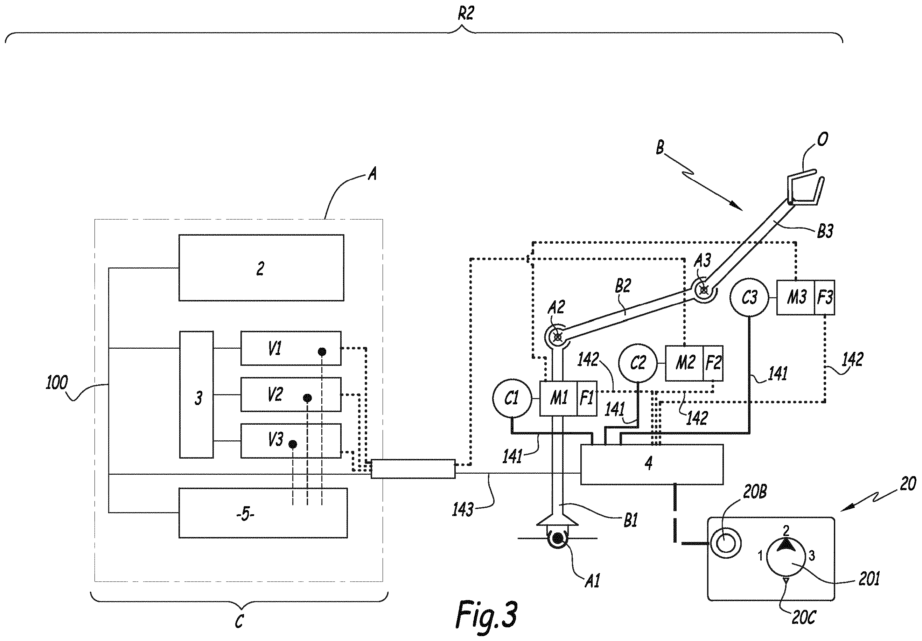

La figure 3 montre un deuxième mode de réalisation du robot R2 conforme à l'invention, qui diffère du robot R1 en ce qu'il comprend un organe de libération des freins, à savoir un boîtier de commande des freins 20 disposé à l'extérieur de l'armoire A, à proximité du bras de robot B. Dans la suite, les éléments du robot R2 similaires à ceux du robot R1 ne sont pas décrits à nouveau, et portent les mêmes références numériques.

Le boîtier 20 est relié à l'unité d'interfaçage 4 et comprend une interface 201 de sélection d'un frein F1 à F3, par exemple un bouton rotatif ayant trois positions correspondant chacune à la sélection d'un frein F1, F2 ou F3 ou du moteur M1 à M3 associé à ce frein.

L'interface 201 permet à un opérateur de sélectionner la partie mobile B1 à B3 qu'il souhaite déplacer manuellement, en activant la fonction de freinage électrique remplie par le moteur M1 à M3 correspondant, grâce à la force contre-électromotrice que le déplacement manuel de la partie mobile B1, B2 ou B3 sélectionnée génère dans les bobinages des phases du moteur M1, M2 ou M3 mises en court-circuit.

Le boitier de commande des freins 20 dispose d'un contacteur homme-mort 20B, qui est directement câblé à l'unité d'interfaçage 4. En d'autres termes, aucun organe n'est interposé entre le contacteur homme-mort 20B, d'une part, et l'unité d'interfaçage 4, d'autre part. L'interface 201 comprend un bouton poussoir 20C d'ouverture du frein F1, F2 ou F3 sélectionné.

L'unité d'interfaçage 4 comprend en outre une unité de calcul apte à exécuter des routines de surveillance autonome, afin d'assurer un freinage sécurisé sans solliciter le contrôleur de sécurité 5. L'unité d'interfaçage est donc apte à réaliser les étapes 6d) et 6e).

Quand l'opérateur utilise le boitier de commande des freins 20 lorsque qu'il souhaite libérer un frein F1, F2 ou F3 pour déplacer manuellement une partie mobile B1, B2 ou B3 du bras de robot B, il doit préalablement et durant toute la procédure maintenir appuyé le contacteur homme-mort 20B du boîtier de commande des freins 20.

L'opérateur sélectionne à l'aide du bouton 201 le degré de liberté à libérer, c'est-à-dire le frein F1 à F3 à ouvrir. Cette consigne est transmise à l'unité d'interfaçage 4 qui transmet l'information à l'unité centrale 2.

L'opérateur utilise le bouton 20C pour commander l'ouverture du frein F1, F2 ou F3, tout en maintenant le contacteur homme-mort 20B enfoncé. L'unité d'interfaçage 4 ordonne alors au contrôleur de sécurité 5 de désactiver la fonction de coupure du couple sur l'une des branches 200A ou 200B du circuit pont 200 associé au frein F1, F2 ou F3 sélectionné, ce qui a pour conséquence d'activer la fonction de freinage électrique au moyen du moteur M1 à M3 sélectionné, grâce à la force contre-électromotrice que le déplacement manuel de la partie mobile B1, B2 ou B3 sélectionnée génère dans les bobinages des phases du moteur M1, M2 ou M3 sélectionné, mises en court-circuit. L'opérateur peut alors déplacer manuellement la partie mobile B1, B2 ou B3 en toute sécurité.

Dans l'exemple de la figure 3, le robot R2 ne comprend pas de boîtier de commande manuelle. En variante, le robot R2 peut comporter, en plus du boîtier de commande des freins 20, un boîtier de commande manuelle similaire au boîtier de commande manuelle 10 du robot R1.

Le procédé de commande du robot R2 est alors similaire au procédé décrit en référence au robot R1 si l'opérateur utilise le boîtier de commande manuelle 10.

L'invention ne se limite pas à un robot trois axes tel que le robot R1 ou R2. L'invention peut s'appliquer à un robot à au moins deux axes. Par exemple, l'invention peut s'appliquer à un robot cartésien à deux axes linéaires, à un robot SCARA quatre axes ou à un robot articulé à six axes. Au moins l'un des axes peut avoir un mouvement de translation.

Les robots R1 et R2 assurent la commande des moteurs M1, M2 et M3 grâce à l'unité centrale 2 et à la carte de contrôle 3. En variante, la commande des moteurs M1, M2 et M3 est réalisée par un organe unique relié aux variateurs V1, V2 et V3, qui remplace l'unité centrale 2 et la carte de contrôle 3.

Les robots R1 et R2 comportent à la fois une unité d'interfaçage 4 et un contrôleur de sécurité 5, qui sont séparés, c'est-à-dire que l'unité d'interfaçage 4 est intégrée au bras de robot B tandis que le contrôleur de sécurité 5 est logé dans l'armoire A. Le contrôleur de sécurité 5 fait partie d'un système de sécurité qui comprend également l'unité d'interfaçage 4.

En variante, l'unité d'interfaçage 4 et le contrôleur de sécurité 5 sont réunis physiquement sur une même carte électronique qui constitue un unique système de sécurité qui est relié aux variateurs V1 à V3.

La présence de l'unité d'interfaçage 4 dans le bras de robot B est facultative et permet de simplifier la liaison entre le bras de robot B et l'unité de contrôle C. Dans ce cas, le contrôleur de sécurité 5 constitue à lui seul le système de sécurité.

Dans le cadre de l'invention, les modes de réalisation et les variantes décrits peuvent être combinés entre eux, au moins de manière partielle.

## Revendications

1. Procédé de commande des freins (F1, F2, F3) des moteurs (M1, M2, M3) d'un robot multi-axes (R1 ; R2), le robot comprenant :
- un bras de robot (B) comportant au moins deux degrés de liberté associés chacun à :
- un moteur électrique (M1, M2, M3),
- un capteur (C1, C2, C3) de mesure d'informations de mouvement du degré de liberté,
- un frein (F1, F2, F3) apte à bloquer le degré de liberté,
- une unité d'interfaçage (4) des freins (F1-F3) apte à piloter l'alimentation des freins (F1-F3) en énergie électrique,
- une unité centrale (2) apte à :
- exécuter un programme de commande du bras de robot (B),
- déterminer et envoyer des consignes de position,
- des variateurs (V1, V2, V3) aptes à générer, en fonction des consignes de position et des informations de mouvement, des courants d'alimentation de phases des moteurs (M1-M3), et disposant d'une fonction de coupure du couple des moteurs (M1-M3),
- un système de sécurité (4, 5) apte à analyser les informations de mouvement, à commander les freins (F1-F3) et à commander la fonction de coupure du couple des moteurs (M1-M3),
le procédé comportant une étape 6a) consistant à sélectionner un moteur (M1-M3) et est **caractérisé en ce qu'**il comporte en outre des étapes successives consistant à :
- 6b) activer une fonction de freinage électrique au moyen du moteur (M1-M3) sélectionné, la fonction de freinage électrique étant assurée grâce à la force contre-électromotrice que le mouvement du bras de robot (B) génère dans les bobinages des phases du moteur mises en court-circuit,
- 6c) ouvrir le frein (F1-F3) associé au moteur (M1-M3) sélectionné,
- 6d) comparer à un seuil prédéterminé les informations de mouvement délivrées par le capteur (C1-C3) associé au moteur (M1-M3) sélectionné lorsque celui-ci assure la fonction de freinage électrique, et
- 6e) fermer le frein (F1-F3) associé au moteur (M1-M3) sélectionné lorsque les informations de mouvement dépassent le seuil,
et **en ce que** le procédé comporte en outre une étape 2) se déroulant avant l'étape 6a) et consistant à activer la fonction de coupure sécurisée du couple des moteurs (M1-M3).

2. Procédé selon la revendication 1, **caractérisé en ce que** les informations de mouvement sont des positions, des vitesses et/ou des accélérations, et **en ce que** lors de l'étape 6d), les informations de mouvement sont comparées à des seuils de même nature.

3. Procédé selon l'une quelconque des revendications précédentes, **caractérisé en ce qu'**il comporte une étape supplémentaire 5) consistant à activer un organe de validation (10B, 20B), la désactivation de l'organe de validation (10B, 20B) entraînant la fermeture du frein (F1-F3) associé au moteur (M1-M3) sélectionné, et la coupure du couple du moteur (M1-M3) sélectionné.

4. Procédé selon l'une quelconque des revendications précédentes, **caractérisé en ce que** les étapes 6b), 6c), 6d) et 6e) sont mises en œuvre par le système de sécurité (4, 5).

5. Robot (R1, R2) pour la mise en œuvre d'un procédé de commande des freins (F1, F2, F3) des moteurs (M1, M2, M3) d'un robot multi-axes (R1 ; R2), le robot comportant :
- un bras de robot (B) comportant au moins deux degrés de liberté associés chacun à :
- un moteur électrique (M1-M3),
- un capteur (C1-C3) de mesure d'informations de mouvement du degré de liberté et
- un frein (F1-F3) apte à bloquer le degré de liberté,
- une unité d'interfaçage (4) des freins (F1-F3), apte à piloter l'alimentation des freins (F1-F3) en énergie électrique,
- une unité centrale (2) apte à
- exécuter des programmes de commande du bras de robot (B),
- déterminer et envoyer des consignes de position des degrés de liberté,
- des variateurs (V1-V3) aptes à générer, en fonction des consignes de position et des informations de mouvement, des courants d'alimentation des phases des moteurs (M1-M3), chaque variateur (V1-V3) intégrant une fonction de coupure du couple,
- un système de sécurité (4, 5) apte à analyser les informations de mouvement, à commander les freins (F1-F3) et à commander la fonction de coupure du couple des moteurs (M1-M3),
**caractérisé :**
- **en ce qu'**il comporte un organe de libération des freins (10, 20) relié au système de sécurité (4, 5) et permettant la sélection du moteur (M1-M3) associé au frein (F1, F2, F3) à ouvrir,
- **en ce que** le système de sécurité (4, 5) est apte à activer une fonction de freinage électrique au moyen du moteur (M1-M3) sélectionné, la fonction de freinage électrique étant assurée grâce à la force contre-électromotrice que le mouvement du bras de robot (B) génère dans les bobinages des phases du moteur mises en court-circuit, après activation de la fonction de coupure sécurisée du couple des moteurs, et
- **en ce que** le système de sécurité (4, 5) est apte à comparer à un seuil prédéterminé les informations de mouvement délivrées par le capteur (C1-C3) associé au moteur (M1-M3) sélectionné lorsque celui-ci assure la fonction de freinage électrique, et à déclencher la fermeture du frein (F1-F3) associé au moteur (M1-M3) sélectionné lorsque les informations de mouvement dépassent le seuil.

6. Robot (R1, R2) selon la revendication 5, **caractérisé en ce que** l'organe de libération des freins (10, 20) comporte un organe de validation (10B, 20B) dont la désactivation entraîne la fermeture du frein (F1-F3) associé au moteur (M1-M3) sélectionné.

7. Robot (R1, R2) selon l'une quelconque des revendications 5 ou 6, **caractérisé en ce que** l'unité centrale (2), les variateurs (V1-V3) et un contrôleur de sécurité (5) faisant partie du système de sécurité (4, 5) sont regroupés dans une armoire (A) distante du bras de robot (B).

8. Robot (R1, R2) selon l'une quelconque des revendications 5 à 7, **caractérisé en ce que** le système de sécurité (4, 5) comprend l'unité d'interfaçage (4) des freins (F1-F3).

9. Robot (R2) selon la revendication 8, **caractérisé en ce que** l'unité d'interfaçage (4) est apte à comparer à un seuil prédéterminé les informations de mouvement délivrées par le capteur (C1-C3) associé au moteur (M1-M3) sélectionné lorsque celui-ci assure la fonction de freinage électrique, et à déclencher la fermeture du frein (F1-F3) associé au moteur (M1-M3) sélectionné lorsque les informations de mouvement dépassent le seuil.

10. Robot (R2) selon la revendication 9, **caractérisé en ce que** l'organe de libération des freins est un boitier de libération des freins (20) relié à l'unité d'interfaçage (4) des freins (F1-F3).

11. Robot (R2) selon la revendication 10, **caractérisé en ce que** l'unité d'interfaçage (4) des freins (F1-F3) est située dans le bras de robot (B).

12. Robot (R1) selon l'une quelconque des revendications 5 à 8, **caractérisé en ce que** l'organe de libération des freins est un boitier de commande manuelle (10) relié à l'unité centrale (2).

## Patentansprüche

1. Verfahren zum Steuern von Bremsen (F1, F2, F3) von Motoren (M1, M2, M3) eines Mehrachsenroboters (R1; R2), wobei der Roboter umfasst:
- einen Roboterarm (B), der mindestens zwei Freiheitsgrade aufweist, die jeweils zugeordnet sind zu:
- einem elektrischen Motor (M1, M2, M3),
- einem Sensor (C1, C2, C3) zum Messen von Bewegungsinformationen des Freiheitsgrades,
- einer Bremse (F1, F2, F3), die geeignet ist, den Freiheitsgrad zu blockieren,
- eine Schnittstelleneinheit (4) für die Bremsen (F1- F3), die geeignet ist, die Versorgung der Bremsen (F1- F3) mit elektrische Energie zu steuern,
- eine Zentraleinheit (2), die geeignet ist:
- ein Programm zum Steuern des Roboterarms (B) auszuführen,
- Positionssollwerte zu bestimmen und zu senden,
- Variatoren (V1, V2, V3), die geeignet sind, abhängig von den Positionssollwerten und den Bewegungsinformationen Ströme zur Versorgung der Phasen der Motoren (Ml - M3) zu erzeugen und über eine Funktion des Trennens des Drehmoments der Motoren (Ml -M3) zu verfügen,
- ein Sicherheitssystem (4, 5), das geeignet ist, die Bewegungsinformationen zu analysieren, die Bremsen (F1- F3) zu steuern und die Funktion des Trennens des Drehmoments der Motoren (Ml - M3) zu steuern,
wobei das Verfahren einen Schritt 6a) aufweist, der darin besteht, einen Motor (Ml - M3) auszuwählen und **dadurch gekennzeichnet ist, dass** es außerdem die aufeinanderfolgenden Schritte aufweist, die darin bestehen:
- 6b) eine Funktion des elektrischen Bremsens mittels des ausgewählten Motors (Ml -M3) zu aktivieren, wobei die Funktion des elektrischen Bremsens dank der Gegen-elektromotorischen Kraft sichergestellt wird, die die Bewegung des Roboterarms (B) in den Wicklungen der in Kurzschluss gebrachten Phasen des Motors erzeugt,
- 6c) die dem ausgewählten Motor (Ml - M3) zugeordnete Bremse (F1- F3) zu öffnen,
- 6d) die Bewegungsinformationen, die von dem Sensor (C1 - C3) geliefert werden, der dem ausgewählten Motor (Ml - M3) zugeordnet ist, wenn dieser die Funktion des elektrischen Bremsens sicherstellt, mit einer vorbestimmten Schwelle zu vergleichen, und
- 6e) die dem ausgewählten Motor (M1 - M3) zugeordnete Bremse (F1- F3) zu schließen, wenn die Bewegungsinformationen die Schwelle überschreiten,
und dass das Verfahren außerdem einen Schritt 2) aufweist, der vor dem Schritt 6a) abläuft und darin besteht, die Funktion des gesicherten Trennens des Drehmoments der Motoren (M1 - M3) zu aktivieren.

2. Verfahren nach Anspruch 1, **dadurch gekennzeichnet, dass** die Bewegungsinformationen Positionen, Geschwindigkeiten und/oder Beschleunigungen sind und dass bei dem Schritt 6d) die Bewegungsinformationen mit Schwellen derselben Art verglichen werden.

3. Verfahren nach einem beliebigen der vorhergehenden Ansprüche, **dadurch gekennzeichnet, dass** es einen zusätzlichen Schritt 5) aufweist, der darin besteht, ein Bestätigungselement (10B, 20B) zu aktivieren, wobei die Deaktivierung des Bestätigungselementes (10B, 20B) das Schließen der dem ausgewählten Motor (Ml - M3) zugeordneten Bremse (F1- F3) und die Trennung des Drehmoments des ausgewählten Motors (Ml - M3) mit sich bringt.

4. Verfahren nach einem beliebigen der vorhergehenden Ansprüche, **dadurch gekennzeichnet, dass** die Schritte 6b), 6c), 6d) und 6e) von dem Sicherheitssystem (4, 5) ausgeführt werden.

5. Roboter (R1, R2) für die Durchführung des Verfahrens zum Steuern der Bremsen (F1, F2, F3) der Motoren (M1, M2, M3) eines Mehrachsenroboters (R1; R2), wobei der Roboter umfasst:
- einen Roboterarm (B), der mindestens zwei Freiheitsgrade aufweist, die jeweils zugeordnet sind zu:
- einem elektrischen Motor (Ml - M3),
- einem Sensor (C1 - C3) zum Messen von Bewegungsinformationen des Freiheitsgrades,
- einer Bremse (F1 - F3), die geeignet ist, den Freiheitsgrad zu blockieren,
- eine Schnittstelleneinheit (4) für die Bremsen (F1 - F3), die geeignet ist, die Versorgung der Bremsen (F1- F3) mit elektrischer Energie zu steuern,
- eine Zentraleinheit (2), die geeignet ist:
- ein Programm zum Steuern des Roboterarms (B) auszuführen,
- Positionssollwerte zu bestimmen und zu senden,
- Variatoren (V1 - V3), die geeignet sind, abhängig von den Positionssollwerten und den Bewegungsinformationen Ströme zur Versorgung der Phasen der Motoren (M1 - M3) zu erzeugen, wobei jeder Variator eine Funktion des Trennens des Drehmoments beinhaltet,
- ein Sicherheitssystem (4, 5), das geeignet ist, die Bewegungsinformationen zu analysieren, die Bremsen (F1- F3) zu steuern und die Funktion des Trennens des Drehmoments der Motoren (Ml - M3) zu steuern,
**dadurch gekennzeichnet:**
- **dass** er ein Element zum Freigeben der Bremsen (10, 20) aufweist, das an das Sicherheitssystem (4, 5) angeschlossen ist und die Auswahl des der zu öffnenden Bremse (F1, F2, F3) zugeordneten Motors (M1 - M3) ermöglicht,
- **dass** das Sicherheitssystem (4, 5) geeignet ist, eine Funktion des elektrischen Bremsens mittels des ausgewählten Motors (Ml - M3) nach der Aktivierung der Funktion des gesicherten Trennens des Drehmoments der Motoren zu aktivieren, wobei die Funktion des elektrischen Bremsens dank der Gegen-elektromotorischen Kraft sichergestellt wird, die die Bewegung des Roboterarms (B) in den Wicklungen der in Kurzschluss gebrachten Phasen des Motors erzeugt, und
- **dass** das Sicherheitssystem (4, 5) geeignet ist, die Bewegungsinformationen, die von dem Sensor (C1 - C3) geliefert werden, der dem ausgewählten Motor (M1 - M3) zugeordnet ist, wenn dieser die Funktion des elektrischen Bremsens sicherstellt, mit einer vorbestimmten Schwelle zu vergleichen, und das Schließen der dem ausgewählten Motor (M1 - M3) zugeordneten Bremse (F1- F3) auszulösen, wenn die Bewegungsinformationen die Schwelle überschreiten.

6. Roboter (R1, R2) nach Anspruch 5, **dadurch gekennzeichnet, dass** das Element (10, 20) zum Freigeben der Bremsen ein Bestätigungselement (10B, 20B) aufweist, dessen Deaktivierung das Schließen der dem ausgewählten Motor (M1 - M3) zugeordneten Bremse (F1 - F3) mit sich bringt.

7. Roboter (R1, R2) nach einem beliebigen der Ansprüche 5 oder 6, **dadurch gekennzeichnet, dass** die Zentraleinheit (2), die Variatoren (V1 - V3) und eine Sicherheitssteuervorrichtung (5), die Bestandteile des Sicherheitssystems (4, 5) sind, in einem von dem Roboterarm (B) entfernten Schrank (A) zusammengefasst sind.

8. Roboter (R1, R2) nach einem beliebigen der Ansprüche 5 bis 7, **dadurch gekennzeichnet, dass** das Sicherheitssystem (4, 5) eine Schnittstelleneinheit (4) für die Bremsen (F1 - F3) umfasst.

9. Roboter (R2) nach Anspruch 8, **dadurch gekennzeichnet, dass** die Schnittstelleneinheit (4) geeignet ist, die Bewegungsinformationen, die von dem Sensor (C1 - C3) geliefert werden, der dem ausgewählten Motor (Ml - M3) zugeordnet ist, wenn dieser die Funktion des elektrischen Bremsens sicherstellt, mit einer vorbestimmten Schwelle zu vergleichen und das Schließen der dem ausgewählten Motor (Ml - M3) zugeordneten Bremse (F1- F3) auszulösen, wenn die Bewegungsinformationen die Schwelle überschreiten.

10. Roboter (R2) nach Anspruch 9, **dadurch gekennzeichnet, dass** das Element zum Freigeben der Bremsen ein Kasten (20) zum Freigeben der Bremsen ist, der mit der Schnittstelleneinheit (4) für die Bremsen (F1-F3) verbunden ist.

11. Roboter (R2) nach Anspruch 10, **dadurch gekennzeichnet, dass** die Schnittstelleneinheit (4) für die Bremsen (F1- F3) in dem Roboterarm (B) liegt.

12. Roboter (R1) nach einem beliebigen der Ansprüche 5 bis 8, **dadurch gekennzeichnet, dass** das Element zum Freigeben der Bremsen ein Kasten (10) zur manuellen Steuerung ist, der an die Zentraleinheit (2) angeschlossen ist.

## Claims

1. A method for commanding the brakes (F1, F2, F3) of the motors (M1, M2, M3) of a multi-axis robot (R1; R2), the robot comprising:
- a robot arm (B) comprising at least two degrees of freedom each associated with:
• an electric motor (M1, M2, M3),
• a sensor (C1, C2, C3) measuring movement information of the degree of freedom,
• a brake (F1, F2, F3) able to lock the degree of freedom,
- an interfacing unit (4) of the brakes (F1-F3) able to control the supply of electricity to the brakes (F1-F3),
- a central processing unit (2) able to:
• execute a program for commanding the robot arm (B),
• determine and send position instructions,
- variable drives (V1, V2, V3) able to generate, based on the position instructions and movement information, phase power currents of the motors (M1-M3), and having a torque off function of the motors (M1-M3),
- a security system (4, 5) able to analyze the movement information, command the brakes (F1-F3) and command the torque off function of the motors (M1-M3),
the method comprising a step 6a) consisting in selecting a motor (M1-M3) and being **characterized in that** it further comprises the following successive steps consisting in:
- 6b) activating an electric braking function using the selected motor (M1-M3), the electric braking function owing to the back electromotive force that the movement of the robot arm (B) generates in the windings of the short-circuited phases of the motor,
- 6c) opening the brake (F1-F3) associated with the selected motor (M1-M3),
- 6d) comparing the movement information delivered by the sensor (C1-C3) associated with the selected motor (M1-M3) when the latter is performing the electric braking function with a predetermined threshold,
- 6e) closing the brake (F1-F3) associated with the selected motor (M1-M3) when the movement information exceeds the threshold,
and **in that** it further comprises a step 2) taking place before step 6a) and consisting in activating the safe torque off function of the motors (M1-M3).

2. The method according to claim 1, **characterized in that** the movement information consists of positions, speeds and/or accelerations, and, during step 6d), the movement information is compared to thresholds of the same nature.

3. The method according to any one of the preceding claims, **characterized in that** it comprises an additional step 5) consisting of activating a validation member (10B, 20B), the deactivation of the validation member (10B, 20B) causing closing of the brake (F1-F3) associated with the selected motor (M1-M3), and the cutoff of the torque of the selected motor (M1-M3).

4. The method according to any one of the preceding claims, **characterized in that** steps 6b), 6c), 6d) and 6e) are carried out by the security system (4, 5).

5. A robot (R1, R2) for implementing a method for commanding the brakes (F1, F2, F3) of the motors (M1, M2, M3) of a multi-axis robot (R1; R2), the robot comprising:
- a robot arm (B) comprising at least two degrees of freedom each associated with:
• an electric motor (M1-M3),
• a sensor (C1-C3) measuring movement information of the degree of freedom, and
• a brake (F1-F3) able to lock the degree of freedom,
- an interfacing unit (4) of the brakes (F1-F3) able to control the supply of electricity to the brakes (F1-F3),
- a central processing unit (2) able to:
• execute programs for commanding the robot arm (B),
• determine and send position instructions for the degrees of freedom,
- variable drives (V1-V3) able to generate, based on the position instructions and movement information, feed currents of the phases of the motors (M1-M3), each variable drive (V1-V3) incorporating a torque off function,
- a security system (4, 5) able to analyze the movement information, command the brakes (F1-F3) and command the torque off function of the motors (M1-M3),
**characterized in that**:
- it comprises a member for releasing the brakes (10, 20) connected to the security system (4, 5) and making it possible to select the motor (M1-M3) associated with the brake (F1, F2, F3) to be opened,
- the security system (4, 5) is able to activate an electric braking function using the selected motor (M1-M3), the electric braking function owing to the back electromotive force that the movement of the robot arm (B) generates in the windings of the short-circuited phases of the motor, after activating the safe torque off function of the motors (M1-M3), and
- the security system (4, 5) is able to compare the movement information delivered by the sensor (C1-C3) associated with the selected motor (M1-M3), when the latter performs the electric braking function, to a predetermined threshold, and to activate closing of the brake (F1-F3) associated with the selected motor (M1-M3) when the movement information exceeds the threshold.

6. The robot (R1, R2) according to claim 5, **characterized in that** the release member of the brakes (10, 20) comprises a validation member (10B, 20B), the deactivation of which causes closing of the brake (F1-F3) associated with the selected motor (M1-M3).

7. The robot (R1, R2) according to any one of claims 5 or 6, **characterized in that** the central processing unit (2), the variable drives (V1-V3) and a safety controller (5) that is part of the security system (4, 5) are grouped together in a cabinet (A) separate from the robot arm (B).

8. The robot (R1, R2) according to any one of claims 5 to 7, **characterized in that** the security system (4, 5) comprises the interfacing unit (4) of the brakes (F1-F3).

9. The robot (R2) according to claim 8, **characterized in that** the interfacing unit (4) is able to compare the movement information delivered by the sensor (C1-C3) associated with the selected motor (M1-M3), when the latter performs the electric braking function, to a predetermined threshold, and to activate closing of the brake (F1-F3) associated with the selected motor (M1-M3) when the movement information exceeds the threshold.

10. The robot (R2) according to claim 9, **characterized in that** the release member of the brakes is a housing for releasing the brakes (20) connected to the interfacing unit (4) of the brakes (F1-F3).

11. The robot (R2) according to claim 10, **characterized in that** the interfacing unit (4) of the brakes (F1-F3) is situated in the robot arm (B).

12. The robot (R1) according to any one of claims 5 to 8, **characterized in that** the release member of the brakes is a manual command unit (10) connected to the central processing unit (2).
